Europäisches Patentamt

European Patent Office

Office européen des brevets

(19)

(11) Numéro de publication : **0 151 089**
**B1**

(12)

# FASCICULE DE BREVET EUROPÉEN

(45) Date de publication du fascicule du brevet :
**13.04.88**

(51) Int. Cl.⁴ : **G 01 L   3/10**

(21) Numéro de dépôt : **85810013.4**

(22) Date de dépôt : **18.01.85**

(54) Dispositif de mesure d'un couple ou d'un angle de torsion.

(30) Priorité : **30.01.84 CH 413/84**

(43) Date de publication de la demande :
**07.08.85 Bulletin 85/32**

(45) Mention de la délivrance du brevet :
**13.04.88 Bulletin 88/15**

(84) Etats contractants désignés :
**AT CH DE FR GB IT LI NL SE**

(56) Documents cités :
**DE-A- 3 307 105**
**FR-A- 2 404 201**
**FR-A- 2 421 365**
**GB-A- 2 097 131**
**US-A- 3 329 012**
**US-A- 4 356 732**
**MEASUREMENT TECHNIQUES, vol. 21, no. 7, juillet
1978, pages 930-934, Plenum Publishing Corp., New
York, US; A.T. ARTAMONOV et al.: "Converter of the
torsion angle of a shaft into digital code"**

(73) Titulaire : **VIBRO-METER SA
Route de Moncor 4
CH-1700 Fribourg (CH)**

(72) Inventeur : **Lustenberger, Martin
Rue d'Or 13
CH-1700 Fribourg (CH)**

(74) Mandataire : **Steiner, Martin et al
c/o AMMANN INGENIEURS-CONSEILS EN PRO-
PRIETE INTELLECTUELLE SA BERNE Schwarztorstrasse 31
CH-3001 Bern (CH)**

EP 0 151 089 B1

Il est rappelé que : Dans un délai de neuf mois à compter de la date de publication de la mention de la délivrance du brevet européen toute personne peut faire opposition au brevet européen délivré. auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18. rue St-Denis, 75001 Paris, France

## Description

La présente invention concerne un dispositif de mesure d'un couple ou d'un angle de torsion avec au moins une paire d'éléments de blindage disposés face à face concentriquement à un arbre transmetteur de couple, chaque élément comprenant une pluralité de zones conductrices, l'un des éléments de ladite paire étant relié à une extrémité de l'arbre, l'autre élément à l'autre extrémité dudit arbre et au moins deux bobines concentriques à l'arbre montées à proximité des éléments et séparées par ceux-ci.

Le document « Measurement Technique », Vol. 21, No. 7, juillet 1978, New York (US), p. 930-934 décrit un convertisseur d'angle de torsion d'un arbre en un code digital, comprenant une paire d'éléments de blindage avec des zones conductrices disposés face à face concentriquement à un arbre transmetteur de couple et deux bobines concentriques à l'arbre montées à proximité des éléments et séparées par ceux-ci. Cependant, les éléments de blindage d'une paire ont un nombre différent de zones conductrices et le dispositif fait appel au déplacement de franges de moiré dans le but d'obtenir un signal de sortie digital.

On connaît du brevet GB 2 097 131 un transducteur de couple comportant deux paires d'ailes, les ailes d'une paire se faisant face et ayant un décalage angulaire relatif déterminé. Les deux paires d'ailes permettent une mesure différentielle. A chaque paire d'ailes est associée une bobine en contact intime avec une de ces ailes. Cependant, le décalage relatif des ailes d'une paire se traduit par une variation d'impédance de la bobine associée, de sorte que malgré l'effet différentiel, la précision de la mesure est limitée.

On connaît aussi du brevet US 4 356 732 un dispositif dans lequel les zones des deux éléments sont alignées pour un couple initial donné. Les bobines sont alimentées par un signal de haute fréquence et elles induisent des courants de Foucault dans les zones conductrices des éléments. L'énergie nécessaire à la création de ces courants de Foucault est fournie par les bobines, ce qui se traduit par une variation d'impédance de celles-ci. La formation des courants de Foucault est influencée à son tour par le déplacement angulaire relatif des éléments sous l'effet d'un couple de torsion appliqué à l'arbre, c'est-à-dire par l'ouverture ou la fermeture des espaces non conducteurs entre les zones conductrices des éléments. Il en résulte que la mesure de la variation d'impédance des bobines permet de connaître le déplacement angulaire relatif des éléments et en conséquence le couple appliqué à l'arbre. Cependant, comme dans le document précédent, dans un tel dispositif, la précision de la mesure est limitée par le fait que la variation d'impédance des bobines est relativement faible, même pour un angle de torsion relativement élevé, par exemple de l'ordre de 20°. En outre, les bobines sont sensibles aux variations de la température, de sorte que la variation d'impédance produite par le déplacement angulaire relatif des éléments dépend aussi de la température.

En conséquence, le but de l'invention est de réaliser un dispositif de mesure d'un couple ou d'un angle de torsion ne présentant pas les désavantages mentionnés ci-dessus. En outre, le dispositif doit être de construction électrique simple.

Pour atteindre ce but, le dispositif selon l'invention est réalisé comme décrit dans les revendications 1, 10 ou 11.

Par le fait que le dispositif comprend une bobine émettrice et une ou des bobines réceptrices, séparées par des éléments de blindage variable, la transmission du signal entre la bobine émettrice et la ou les bobines réceptrices se fait par voie inductive. La paire d'éléments interposée entre la bobine émettrice et la bobine réceptrice se comporte comme un blindage dont l'effet est variable selon le déplacement angulaire relatif des éléments. Ceci montre que le principe de fonctionnement du dispositif selon l'invention ne fait pas appel à des courants de Foucault produisant une variation d'impédance d'une bobine. La bobine émettrice est alimentée par un courant constant de haute fréquence, de sorte que l'effet de la température sur cette bobine n'influence pas la mesure. De même, la bobine réceptrice est insérée dans un circuit redresseur à haute impédance et le signal délivré par ce circuit est pratiquement indépendant de la température. On obtient ainsi une excellente stabilité en température, même sans arrangement différentiel. En outre, le signal utile de sortie n'est pas une variation d'un signal de base mais il est variable dans un large domaine, par exemple d'un facteur de 1 à 10 entre une position relative des éléments telle que les espaces transparents entre les zones non transparentes d'un élément sont recouverts par les zones non transparentes de l'autre élément et une position relative des éléments telle que les zones non transparentes des deux éléments se recouvrent. Le signal utile délivré par le dispositif varie donc dans de grandes limites et il peut atteindre des valeurs élevées.

L'invention va être décrite ci-après à titre d'exemple et à l'aide du dessin dans lequel :

La figure 1 montre le schéma électrique de principe du dispositif,

la figure 2 montre une forme d'exécution du dispositif de la figure 1,

la figure 3 montre un exemple des disques du dispositif de la figure 1,

la figure 4 montre schématiquement une disposition du dispositif permettant une mesure différentielle,

la figure 5 montre les relations entre les secteurs des disques du dispositif de la figure 4, et

la figure 6 montre le schéma électrique du branchement des bobines du dispositif de la figure 4.

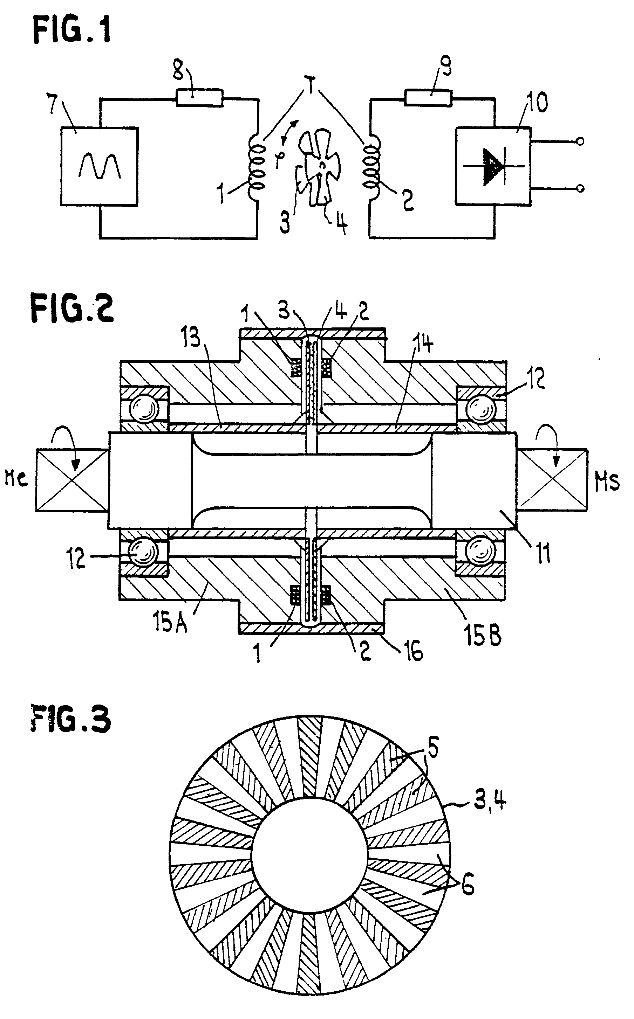

La figure 1 est le schéma de principe du dispositif. Ce dernier comprend un ensemble T avec une bobine émettrice 1 et une bobine réceptrice 2. Les bobines sont séparées par des disques 3 et 4 montés face à face à une faible distance l'un de l'autre. L'un des disques est relié à une extrémité d'un arbre de torsion ou transmetteur du couple à mesurer et l'autre disque à l'autre extrémité du même arbre. Chaque disque comprend une pluralité de secteurs non transparents pour les ondes électromagnétiques 5 séparées par des secteurs transparents 6, ces secteurs étant disposés selon une configuration régulière à la surface latérale intérieure des disques, comme indiqué en figure 3 montrant les secteurs non transparents 5 et les secteurs transparents 6 séparant les premiers. Les secteurs peuvent former un motif de moiré sur le disque. Dans l'exemple de la figure 1, les disques peuvent être disposés de manière qu'en l'absence de couple sur l'arbre, les secteurs non transparents 5 d'un disque recouvrent les secteurs transparents 6 de l'autre disque. Dans ce cas, l'effet de blindage de l'ensemble est maximum et le signal transmis à la bobine réceptrice 2 est minimum. La bobine émettrice 1 est alimentée par un générateur de haute fréquence 7 à travers une résistance 8 de valeur élevée, ce qui indique que la bobine est en réalité alimentée par un générateur de courant constant de haute fréquence. En conséquence, le courant dans la bobine émettrice n'est pas influencé par les variations de cette bobine en fonction de la température et le champ électromagnétique transmis à la bobine réceptrice est indépendant de la température. La bobine réceptrice est reliée par une résistance 9 de forte valeur à un circuit détecteur 10 habituel. Le circuit est donc à haute impédance et la variation en elle-même relativement faible de la bobine 2 en fonction de la température n'a aucune influence pratique sur le signal de sortie du détecteur.

La figure 2 montre un exemple de réalisation du dispositif de la figure 1. Celui-ci comprend un arbre de torsion 11 monté à chaque extrémité dans un roulement à billes 12. Le couple à transmettre et à mesurer est appliqué à une extrémité de l'arbre, par exemple en Me et il est transmis à l'autre extrémité, en Ms. Les disques 3 et 4 sont montés respectivement sur des tubes de liaison 13 et 14. Le tube 13 est fixé à l'extrémité d'entrée de couple Me de l'arbre 11 et le tube 14 à l'extrémité de sortie de couple Ms du même arbre. Les paliers 12 supportant l'arbre 11 sont fixés dans un support en deux parties 15A, 15B en matière isolante. Ces parties sont reliées par une pièce métallique cylindrique 16 formant blindage contre les influences électromagnétiques extérieures. La bobine émettrice 1 est montée dans un logement de la face latérale intérieure du support 15A, immédiatement devant le disque 3, le rayon central de la bobine correspondant au rayon central du disque. La bobine réceptrice 2 est montée dans un logement de la face latérale intérieure du support 15B, immédiatement en face du disque 4. Les bobines 1 et 2 sont montées vis-à-vis l'une de l'autre et elles sont centrées sur l'arbre 11, de même que les disques 3 et 4. Le tout est monté dans un bâti non représenté. La configuration du dispositif selon figures 1 et 2 est stable relativement aux influences de l'environnement. Les critères importants pour la conception de l'arbre 11 sont la rigidité et la surcharge admissible. Une rotation relative de 0,5° sous charge normale donne un bon compromis entre une grande rigidité, c'est-à-dire une faible oscillation de torsion de l'ensemble et un signal de sortie suffisant. En augmentant le nombre des secteurs des disques, on peut en principe obtenir un signal de sortie utilisable pour un déplacement angulaire relatif plus faible.

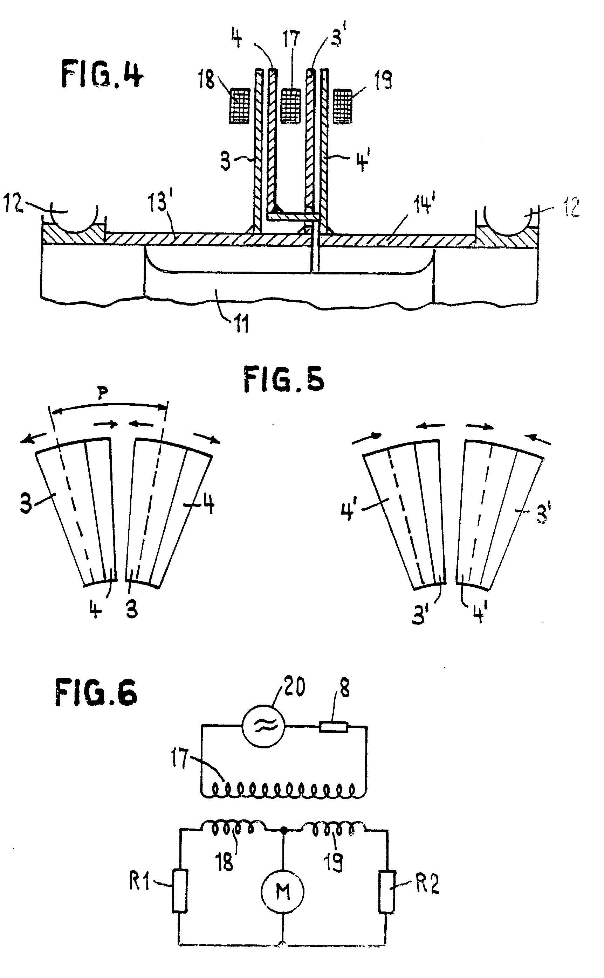

La figure 4 montre une forme d'exécution du dispositif permettant une mesure différentielle. Une telle mesure permet d'améliorer la stabilité en température et par rapport aux influences de l'environnement. Dans ce cas, on utilise deux paires de disques à secteurs 3, 4 et 3', 4'. Les disques 3 et 3' sont reliés par un tube de liaison 13' à l'extrémité d'entrée de couple Me de l'arbre 11 et les disques 4 et 4' sont reliés par un tube de liaison 14' à l'extrémité de sortie de couple Ms de l'arbre 11. Une bobine émettrice 17 est montée au centre, entre les paires de disques 3, 4 et 3', 4'. Des bobines réceptrices 18 et 19 sont montées vis-à-vis de la bobine émettrice, du côté extérieur des disques 3 et 4. Les bobines 17, 18 et 19 sont concentriques à l'arbre 11. La figure 5 montre que les secteurs des disques 3 et 4 sont décalés les uns par rapport aux autres d'un quart de pas p, de même que les secteurs des disques 3' et 4'. De même, les secteurs 3 et 3' ainsi que les secteurs 4 et 4' sont décalés entre eux d'un quart de pas. Dans ces conditions, et lorsqu'un couple est appliqué à l'arbre 11, les déplacements angulaires relatifs des secteurs des paires de disques, représentés par des flèches, sont tels que les secteurs 3 et 4 s'écartent l'un de l'autre, tandis que les secteurs 3' et 4' de l'autre paire se rapprochent l'un de l'autre, et inversement si le couple est appliqué dans l'autre direction. Cette disposition permet donc la mesure différentielle des déplacements angulaires relatifs des disques. La figure 6 montre le schéma en pont utilisé pour cette mesure différentielle. Les bobines réceptrices 18 et 19 forment un pont de mesure avec les résistances R1 et R2, un instrument de mesure M étant placé dans la diagonale de ce pont. Un générateur de signal de haute fréquence 20 alimente la bobine émettrice 17 à travers une résistance 8 de valeur élevée.

Il est visible de ce qui précède que le dispositif selon l'invention est de conception simple et qu'il présente l'avantage d'être particulièrement stable en température et peu sensible aux influences de l'environnement. En outre, il délivre un signal utile de sortie variant dans une large plage de valeurs.

**Revendications**

1. Dispositif de mesure d'un couple ou d'un angle de torsion, comprenant :

un arbre (11) pour recevoir et transmettre un couple à mesurer (Me, Ms),

au moins une paire d'éléments de blindage en forme de disques (3, 4 ; 3', 4') se faisant face et disposés concentriquement à l'arbre (11), l'un des éléments (3, 3') de ladite paire étant relié à une extrémité de l'arbre (11), l'autre élément (4, 4') à l'autre extrémité dudit arbre, caractérisé en ce que chacun desdits éléments de blindage comprend une pluralité de zones électriquement conductrices (5) séparées par des zones électriquement non conductrices (6) de configuration identique, le nombre desdites zones (5, 6) étant le même sur les deux éléments de blindage (3, 4 ; 3', 4'), lesdites zones s'étendant entre un diamètre extérieur et un diamètre intérieur des éléments de blindage, lesdits éléments étant décalés angulairement l'un par rapport à l'autre en réponse audit couple pour former un blindage électromagnétique variable, et

au moins deux bobines (1, 2) de même diamètre moyen disposées concentriquement audit arbre (11), montées à proximité immédiate et à côté des éléments de blindage (3, 4 ; 3', 4') et séparées par ceux-ci, l'une desdites bobines (1) étant une bobine primaire émettrice d'un signal électromagnétique, l'autre bobine (2) étant une bobine secondaire réceptrice dudit signal, délivrant un signal de sortie dont l'amplitude dépend directement de l'écart angulaire relatif entre lesdits éléments de blindage déterminé par le couple de torsion appliqué (Me, Ms).

2. Dispositif selon la revendication 1, caractérisé en ce que les zones électriquement conductrices (5) sont non transparentes pour les ondes électromagnétiques et que les zones électriquement non conductrices (6) sont transparentes pour les ondes électromagnétiques, lesdites zones (5, 6) étant disposées à la surface des éléments de blindage (3, 4 ; 3', 4') selon une configuration angulaire régulière, et en ce qu'en l'absence d'un couple de torsion appliqué à l'arbre (11), les zones non transparentes (5) de l'un des éléments de blindage (3) recouvrent les zones transparentes (6) de l'autre élément de blindage (4) de la paire d'éléments de blindage, de sorte que le signal de sortie correspondant délivré par la bobine secondaire réceptrice (2) est minimum.

3. Dispositif selon la revendication 1, caractérisé en ce que les zones (5, 6) sont des secteurs à la surface latérale des éléments de blindage (3, 4 ; 3', 4') en forme de disques.

4. Dispositif selon la revendication 1, caractérisé en ce que l'arbre récepteur et transmetteur de couple (11) est monté entre des paliers (12) et en ce que des moyens de liaison (13, 14) relient chaque élément de blindage (3, 4) à une extrémité respective de l'arbre, lesdits paliers étant tenus dans des supports (15A, 15B) séparés par les éléments de blindage et reliés entre eux par une pièce cylindrique formant blindage, les bobines primaire émettrice (1) et secondaire réceptrice (2) étant montées vis-à-vis l'une de l'autre dans des logements des faces latérales intérieures des supports (15A, 15B), de part et d'autre de la paire d'éléments de blindage et à proximité de ceux-ci.

5. Dispositif selon la revendication 1, caractérisé en ce que la bobine primaire émettrice (1, 17) est alimentée par un générateur (7) de courant constant de haute fréquence.

6. Dispositif selon la revendication 1, caractérisé en ce que la ou les bobines secondaires réceptrices sont connectées à un circuit comprenant un redresseur (10).

7. Dispositif selon la revendication 1, caractérisé en ce qu'il comprend deux paires d'éléments de blindage (3, 4 ; 3', 4') séparant une bobine primaire émettrice (17) disposée entre lesdites paires d'éléments de blindage des bobines secondaires réceptrices (18, 19) disposées respectivement à l'extérieur, à côté des paires d'éléments, vis-à-vis de la bobine primaire émettrice (17), les premiers éléments (3, 3') de chaque paire étant reliés à une extrémité de l'arbre (11), les seconds éléments (4, 4') de chaque paire étant reliés à l'autre extrémité de l'arbre, cette disposition permettant une mesure différentielle du déplacement angulaire relatif des premiers et seconds éléments de blindage.

8. Dispositif selon la revendication 7, caractérisé en ce que les zones (5, 6) des premiers (3, 4) et seconds (3', 4') éléments de blindage de chaque paire ont un décalage angulaire relatif d'un quart de pas, les zones des éléments de la première paire (3, 4) étant décalées d'un quart de pas par rapport aux zones des éléments de la seconde paire (3', 4').

9. Dispositif selon la revendication 7 ou 8, caractérisé en ce que la bobine primaire émettrice (17) est alimentée par un générateur de courant constant de haute fréquence (20), les bobines secondaires réceptrices (18, 19) formant deux branches d'un pont de mesure.

10. Dispositif de mesure d'un couple ou d'un angle de torsion, comprenant :

un arbre (11) pourvu de paliers (12) à ses extrémités pour recevoir et transmettre un couple à mesurer,

au moins une paire d'éléments de blindage (3, 4 ; 3', 4') se faisant face et disposés concentriquement à l'arbre (11), ces éléments de blindage étant respectivement connectés par des moyens de couplage (13, 14) à une extrémité de l'arbre, caractérisé en ce que lesdits paliers (12) sont montés dans des supports (15A, 15B) séparés par les éléments de blindage et reliés entre eux par une pièce cylindrique (16) formant blindage contre les influences électromagnétiques externes, lesdits éléments de blindage comprenant une pluralité de zones électriquement conductrices (5) séparées par des zones électriquement non conductrices (6) et étant décalés angulairement l'un par rapport à l'autre en réponse audit couple (Me, Ms) appliqué à l'arbre pour former un blindage électromagnétique variable, et

au moins deux bobines (1, 2) se faisant face, disposées concentriquement audit arbre (11) et montées dans des logements des faces latérales internes desdits supports (15A, 15B), de chaque côté de ladite paire d'éléments de blindage (3, 4) et à proximité immédiate de ceux-ci, l'une desdites bobines (1) étant une bobine primaire émettrice d'un signal électromagnétique, l'autre bobine (2) étant une bobine secondaire réceptrice du signal électromagnétique et délivrant un signal de sortie dont l'amplitude dépend directement dudit blindage électromagnétique variable.

11. Dispositif de mesure d'un couple ou d'un angle de torsion, comprenant :

un arbre (11) pour recevoir et transmettre un couple à mesurer (Me, Ms),

deux paires d'éléments de blindage (3, 4 ; 3', 4'), chaque paire comprenant des premiers (3, 3') et seconds (4, 4') éléments de blindage se faisant face et disposés concentriquement audit arbre (11), chacun desdits éléments de blindage comprenant une pluralité de zones électriquement conductrices (5) séparées par des zones électriquement non conductrices (6), lesdits premiers éléments (3, 3') de chaque paire étant couplés à une extrémité de l'arbre (11), les seconds éléments (4, 4') de chaque paire étant couplés à l'autre extrémité de l'arbre, lesdits premiers et seconds éléments de blindage étant décalés mutuellement en réponse audit couple (Me, Ms) pour former un blindage électromagnétique variable, et

lesdites paires d'éléments de blindage (3, 4 ; 3', 4') étant disposées respectivement de chaque côté d'une bobine primaire émettrice (17), des bobines secondaires réceptrices (18, 19) étant disposées en face de la bobine primaire émettrice (17) respectivement du côté extérieur de ladite paire d'éléments de blindage, lesdites bobines secondaires réceptrices délivrant un signal de sortie dont l'amplitude dépend dudit blindage électromagnétique variable, ladite paire d'éléments de blindage et lesdites bobines permettant une mesure différentielle du déplacement angulaire relatif entre les premiers et seconds éléments de blindage en réponse audit couple (Me, Ms) appliqué.

**Claims**

1. A device for measuring a torque or a torsion angle, comprising :

a shaft (11) for receiving and transmitting a torque to be measured (Me, Ms),

at least a pair of disc-shaped screening elements (3, 4 ; 3', 4') facing each other and arranged concentrically to the shaft (11), one of the elements (3, 3') of said pair being connected to an extremity of the shaft (11), the other element (4, 4') at the other extremity of said shaft, characterized in that each of the screening elements comprises a plurality of electrically conductive zones (5) separated by electrically nonconducting zones (6) of identical configuration, the number of said zones (5, 6) being the same on both screening elements, (3, 4 ; 3', 4'), said zones extending between an external diameter and an internal diameter of the screening elements, said elements being angularly mutually shifted in response to said torque for providing a variable electromagnetic screening, and

at least two coils (1, 2) of the same average diameter arranged concentrically to said shaft (11), mounted at immediate vicinity and besides the screening elements (3, 4 ; 3', 4') and separated by said elements, one of said coils (1) being a primary coil emitting an electromagnetic signal, the other coil (2) being a secondary coil receiving said signal, delivering an output signal the amplitude of which depending directly on the relative angular shift between said screening elements determined by the applied torque (Me, Ms).

2. A device according to claim 1, characterized in that the electrically conductive zones (5) are opaque for the electromagnetic waves and that the electrically non conductive zones (6) are transparent for the electromagnetic waves, said zones (5, 6) being arranged at the surface of the screening elements (3, 4 ; 3', 4') according to a regular angular configuration, and in that in the absence of a torque applied to the shaft (11), the non transparentes zones (5) of one of the screening elements (3) overlap the transparent zones (6) of the other screening element (4) of the pair of screening elements, so that the corresponding output signal delivered by the secondary receiving coil (2) is minimum.

3. A device according to claim 1, characterized in that the zones (5, 6) are sectors at the surface of the disc shaped screening elements (3, 4 ; 3', 4').

4. A device according to claim 1, characterized in that the torque receiving and transmitting shaft (11) is mounted between bearings (12) and in that connecting means (13, 14) connect each screening element (3, 4) to one respective extremity of the shaft, said bearings being held in supports (15A, 15B) and separated by the screening elements and connected together by a cylindrical screening forming piece, the primary transmitting coil (1) and the secondary receiving coil (2) being mounted facing each other in recesses of the internal lateral faces of the supports (15A, 15B), on either side of the pair of screening elements and in the vicinity of the latter.

5. A device according to claim 1, characterized in that the primary transmitting coil (1,17) is fed by a high frequency constant current generator (7).

6. A device according to claim 1, characterized in that the secondary receiving coil or the secondary receiving coils are connected to a circuit comprising a rectifier (10).

7. A device according to claim 1, characterized in that it comprises two pairs of screening elements (3, 4 ; 3', 4') separating one primary transmitting coil (17) arranged between said pairs of screening elements from the secondary receiving coils (18, 19) respectively arranged externally, besides the pairs of elements opposite to the primary transmitting coil (17), the first elements (3, 3') of each pair being connected to one extremity of the shaft (11), the second elements (4, 4') of each pair being connected to the other extremity of the shaft, this arrangement permitting a differential measurement of the relative angular shift of the first and second screening elements.

8. A device according to claim 7, characterized in that the zones (5, 6) of the first (3, 4) and second (3', 4') screening elements of each pair have a relative angular shift of a quarter of a step, the zones of the elements of the first pair (3, 4) being shifted of a quarter of a step with respect to the zones of the elements of the second pair (3', 4').

9. A device according to claim 7 or 8, characterized in that the primary transmitting coil (17) is fed by a high frequency constant current generator (20), the secondary receiving coils (18, 19) forming two branches of a measuring bridge.

10. A device for measuring a torque or a torsion angle, comprising :
a shaft (11) provided with bearings (12) at its extremities for receiving and transmitting a torque to be measured,
at least one pair of screening elements (3, 4 ; 3', 4') facing each other and arranged concentrically to the shaft (11), these screening elements being respectively connected by coupling means (13, 14) to one extremity of the shaft, characterized in that said bearings (12) are mounted in supports (15A, 15B) separated by the screening elements and connected together by a cylindrical piece (16) forming screening against the external electromagnetic influences, said screening elements comprising a plurality of electrically conductive zones (5) separated by electrically nonconducting zones (6) and being mutually angularly shifted in response to said torque (Me, Ms) applied to the shaft for forming a variable electromagnetic screening, and
at least two coils (1, 2) facing each other, arranged concentrically to said shaft (11) and mounted in recesses of the internal lateral faces of said supports (15A, 15B) at either side of said pair of screening elements and at immediate vicinity of the latter, one of said coils (1) being a primary coil transmitting an electromagnetic signal, the other coil (2) being a secondary coil receiving said electromagnetic signal and delivering an output signal the amplitude of which depending directly on said variable electromagnetic screening.

11. A device for measuring a torque or a torsion angle, comprising :
a shaft for receiving and transmitting a torque to be measured (Me, Ms),
two pairs of screening elements (3, 4 ; 3', 4'), each pair comprising first (3, 3') and second (4, 4') screening elements facing each other and arranged concentrically to said shaft (11), each of said screening elements comprising a plurality of electrically conductive zones (5) separated by electrically nonconducting zones (6), said first elements (3, 3') of each pair being coupled to one extremity of the shaft (11), the second elements (4, 4') of each pair being coupled to the other extremity of the shaft, said first and second screening elements being mutually shifted in response to said torque (Me, Ms) for forming a variable electromagnetic screening, and
said pairs of screening elements (3, 4 ; 3', 4') being arranged respectively at either side of a primary, transmitting coil (17), secondary receiving coils (18, 19) being arranged opposite to the primary transmitting coil (17) respectively at the external side of said pair of screening elements, said secondary receiving coils delivering an output signal the amplitude of which depending of said variable electromagnetic screening, said pair of screening elements and said coils permitting a differential measurement of the relative angular shift between the first and second screening elements in response to said applied torque (Me, Ms).

**Patentansprüche**

1. Vorrichtung zum Messen eines Drehmomentes oder eines Torsionwinkels, mit :
einem Schaft (11), um ein zu messendes Drehmoment (Me, Ms) zu empfangen und zu übermitteln,
mindestens einem Paar von scheibenförmigen Abschirmelementen (3, 4 ; 3', 4'), die sich gegenüber stehen und konzentrisch zum Schaft (11) angeordnet sind, wobei eines der Elemente (3, 3') des Paares mit einem Ende des Schaftes (11) und das andere Element (4, 4') mit dem anderen Ende des Schaftes verbunden ist, dadurch gekennzeichnet, dass jedes der Abschirmelemente eine Mehrzahl von elektrisch leitenden Zonen (5) aufweist, die durch elektrisch nichtleitende Zonen (6) mit identischer Anordnung getrennt sind, wobei die Anzahl dieser Zonen (5, 6) die gleiche auf beiden Abschirmelementen (3, 4 ; 3', 4') ist und diese Zonen sich zwischen einem äusseren Durchmesser und einem inneren Durchmesser der Abschirmelemente erstrecken und diese Elemente in bezug auf ihre Winkel einer gegenüber dem anderen versetzt ist, nach Massgabe des Drehmoments, um eine elektromagnetisch veränderliche Abschirmung zu bilden, und
mindestens zwei konzentrisch um den Schaft (11) angeordnete Spulen (1, 2) mit gleichem mittleren Durchmesser, angeordnet in der unmittelbaren Nähe und neben den Abschirmelementen (3, 4 ; 3', 4') und durch diese getrennt, wobei eine der Spulen eine ein elektromagnetisches Signal aussendende Primärspule und die andere Spule (2) eine dieses Signal empfangende Sekundärspule ist, die ein Ausgangssignal erzeugt, dessen Amplitude direkt vom relativen Winkelabstand zwischen den Abschirmelementen abhängt, das durch das beaufschlagte Drehmoment (Me, Ms) bestimmt wird.

2. Vorrichtung nach Anspruch 1, dadurch gekennzeichnet, dass die elektrisch leitenden Zonen (5) für die elektromagnetischen Wellen undurchlässig sind und dass die elektrisch nicht leitenden Zonen (6) für die elektromagnetischen Wellen durchlässig sind, wobei diese Zonen auf der Oberfläche der Abschirmelemente (3, 4 ; 3', 4') gemäss einer regelmässigen Winkelanordnung angeordnet sind und dass in Abwesenheit eines auf den Schaft beaufschlagten Drehmomentes die undurchlässigen Zonen (5) des einen Abschirmelementes (3) die durchlässigen Zonen (6) des anderen Abschirmelementes des Abschirmelementpaares überdecken, derart, dass das entsprechende Ausgangssignal von der sekundären Empfangsspule (2) ein Minimum ist.

3. Vorrichtung nach Anspruch 1, dadurch gekennzeichnet, dass die Zonen (5, 6) Sektoren an der Seitenfläche der scheibenförmigen Abschirmelemente (3, 4 ; 3', 4') sind.

4. Vorrichtung nach Anspruch 1, dadurch gekennzeichnet, dass der das Drehmoment empfangende und sendende Schaft (11) zwischen Lagern (12) angeordnet ist und dass Verbindungsmittel (13, 14) jedes Abschirmelement (3, 4) mit dem entsprechenden Ende des Schaftes verbindet, wobei die Lager in durch die Abschirmelemente getrennte Halterungen (15a, 15b) gehalten und untereinander durch ein die Abschirmung bildendes zylindrisches Stück verbunden sind und die primären Sendespulen (1) und sekundäre Empfängerspulen (2) einander gegenüber in Ausnehmungen der inneren Längsseiten der Halterungen (15a, 15b), beidseits des Abschirmelementpaares und in der Nähe derselben angeordnet sind.

5. Vorrichtung nach Anspruch 1, dadurch gekennzeichnet, dass die primäre Sendespule (1, 17) durch einen Hochfrequenz-Gleichstromgenerator (7) gespeist wird.

6. Vorrichtung nach Anspruch 1, dadurch gekennzeichnet, dass die sekundäre (n) Empfängerspule (n) mit einer einen Gleichrichter (10) enthaltenden Schaltung verbunden ist (sind).

7. Vorrichtung nach Anspruch 1, dadurch gekennzeichnet, dass sie zwei Abschirmelementpaare (3, 4 ; 3', 4') enthält, die eine zwischen den Abschirmelementpaaren angeordnete primäre Sendespule (17) von den jeweils aussen, neben den Elementpaaren und gegenüber den Sendespule (17) angeordneten sekundären Empfängerspulen (18, 19) trennt, wobei die ersten Elemente (3, 3') jedes Paares mit einem Ende des Schaftes (11), die zweiten Elemente (4, 4') jedes Paares mit dem anderen Ende des Schaftes verbunden sind und diese Anordnung es gestattet, eine differenzielle Messung der Winkelverschiebung bezüglich der ersten und zweiten Abschirmelemente durchzuführen.

8. Vorrichtung nach Anspruch 7, dadurch gekennzeichnet, dass die Zonen (5, 6) der ersten (3, 4) und zweiten (3', 4') Abschirmelemente jedes Paares eine relative Winkelverschiebung von einem Viertelschritt aufweisen, wobei die Zonen der Elemente des ersten Paares (3, 4) um einen Viertelschritt bezüglich der Zonen der Elemente des zweiten Paares (3', 4') verschoben sind.

9. Vorrichtung nach Anspruch 7 oder 8, dadurch gekennzeichnet, dass die primäre Sendespule (17) durch einen Hochfrequenz-Gleichstromgenerator gespeist wird, wobei die sekundären Empfängerspulen (18, 19) zwei Zweige einer Messbrücke bilden.

10. Vorrichtung zum Messen eines Drehmomentes oder eines Torsionwinkels, mit :

einem an seinen beiden Enden mit Lagern (12) versehenen Schaft (11) zum Empfangen und Uebermitteln eines zu messenden Drehmomentes,

mindestens einem Paar Abschirmelemente (3, 4 ; 3', 4'), die einander gegenüber stehen und konzentrisch zum Schaft (11) angeordnet sind, wobei diese Abschirmelemente jeweils durch Kupplungsmittel (13, 14) mit einem Ende des Schaftes verbunden sind, dadurch gekennzeichnet, dass diese Lager (12) in Halterungen (15a, 15b) angeordnet sind, die durch die Abschirmelemente getrennt und zwischen sich durch ein zylindrisches Stück (16) verbunden sind, das eine Abschirmung gegenüber äusseren elektromagnetischen Einflüssen bildet, wobei die Abschirmelemente eine Mehrzahl von elektrisch leitenden Zonen (5) aufweist, die durch elektrisch nicht-leitende Zonen (6) getrennt sind und bezüglich ihres Winkels eine gegenüber der anderen nach Massgabe des Drehmomentes (Me, Ms), das auf den Schaft beaufschlagt wird, verschoben sind, um eine veränderliche elektromagnetische Abschirmung zu bilden, und

mindestens zwei sich gegenüberliegenden Spulen (1, 2), die konzentrisch zum Schaft (11) und in Ausnehmungen der inneren Längsseiten der Halterungen (15a, 15b), beidseitig des Abschirmelementpaares (3, 4) und in unmittelbarer Nähe derselben, angeordnet sind, wobei die eine der Spulen (1) eine primäre, ein elektromagnetisches Signal aussendende Spule und die andere Spule (2) eine sekundäre, das elektromagnetische Signal empfangende Spule ist und ein Ausgangssignal liefert, dessen Amplitude direkt von der veränderlichen elektromagnetischen Abschirmung abhängt.

11. Vorrichtung zum Messen eines Drehmomentes oder eines Torsionwinkels, mit :

einem Schaft (11) zum Empfangen und Uebermitteln eines zu messenden Drehmomentes (Me, Ms),

zwei Paaren von Abschirmelementen (3, 4 ; 3', 4'), wobei jedes Paar erste (3, 3') und zweite (4, 4') Abschirmelemente aufweist, die sich gegenüber liegen und konzentrisch um den Schaft (11) angeordnet sind, und jedes dieser Abschirmelemente eine Mehrzahl von elektrisch leitenden Zonen (5), die durch elektrisch nicht-leitende Zonen (6) getrennt sind, aufweist, und die ersten Elemente (3, 3') jedes Paares an ein Ende des Schaftes (11) gekoppelt sind und die zweiten Elemente (4, 4') jedes Paares an das andere Ende des Schaftes gekoppelt sind, die ersten und zweiten Abschirmelemente gegeneinander nach Massgabe des Drehmomentes (Me, Ms) verschoben sind, um eine veränderliche, elektromagnetische Abschirmung zu bilden, und

die Abschirmelementpaare (3, 4 ; 3', 4') jeweils beidseitig einer primären Sendespule (17) angeordnet sind, sekundäre Empfängerspulen (18, 19) gegenüber der primären Sendespule (17), resp. ausserhalb des Abschirmelementpaares angeordnet sind und die sekundären Empfängerspulen ein Ausgangssignal liefern, dessen Amplitude von der veränderlichen elektromagnetischen Abschirmung abhängt, wobei das Abschirmelementpaar und die Spulen es gestatten, eine differenzielle Messung der relativen Winkelverschiebung zwischen den ersten und zweiten Abschirmelementen nach Massgabe des beaufschlagten Drehmomentes (Me, Ms) zu messen.

# FIG.1

# FIG.2

# FIG.3

FIG.4

FIG.5

FIG.6